(19) Europäisches Patentamt
European Patent Office
Office européen des brevets

(11) **EP 4 325 615 A1**

(12) **EUROPEAN PATENT APPLICATION**
published in accordance with Art. 153(4) EPC

(43) Date of publication:
**21.02.2024 Bulletin 2024/08**

(21) Application number: **21937036.8**

(22) Date of filing: **03.12.2021**

(51) International Patent Classification (IPC):
*H01M 10/0525* (2010.01)  *H01M 4/485* (2010.01)
*H01M 4/62* (2006.01)  *H01M 10/0562* (2010.01)

(52) Cooperative Patent Classification (CPC):
**H01M 4/485; H01M 4/62; H01M 10/0525;**
**H01M 10/0562;** Y02E 60/10

(86) International application number:
**PCT/JP2021/044435**

(87) International publication number:
**WO 2022/219843 (20.10.2022 Gazette 2022/42)**

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**
Designated Extension States:
**BA ME**
Designated Validation States:
**KH MA MD TN**

(30) Priority: **13.04.2021  JP 2021068043**

(71) Applicant: **Panasonic Intellectual Property**
**Management Co., Ltd.**
**Osaka-shi, Osaka 540-6207 (JP)**

(72) Inventors:
• **SAGARA Akihiko**
  **Kadoma-shi, Osaka 571-0057 (JP)**
• **KUSUMOTO Shohei**
  **Kadoma-shi, Osaka 571-0057 (JP)**
• **WADA Tomokatsu**
  **Kadoma-shi, Osaka 571-0057 (JP)**
• **UEMATSU Masayoshi**
  **Kadoma-shi, Osaka 571-0057 (JP)**

(74) Representative: **Grünecker Patent- und**
**Rechtsanwälte**
**PartG mbB**
**Leopoldstraße 4**
**80802 München (DE)**

(54) **BATTERY**

(57) A battery according to the present disclosure includes a positive-electrode layer, a negative-electrode layer, and an electrolyte layer between the positive-electrode layer and the negative-electrode layer, wherein the negative-electrode layer includes a negative-electrode active material and a first solid electrolyte, the electrolyte layer contains a second solid electrolyte, the negative-electrode active material contains Li, Ti, and O, the first solid electrolyte contains a crystalline phase assigned to a monoclinic crystal and contains Li, M1, and X1, wherein M1 denotes at least one selected from the group consisting of metal elements and metalloid elements other than Li, and X1 denotes at least one selected from the group consisting of F, Cl, Br, and I, and the second solid electrolyte contains a crystalline phase assigned to a trigonal crystal and contains Li, M2, and X2, wherein M2 denotes at least one selected from the group consisting of metal elements and metalloid elements other than Li, and X2 denotes at least one selected from the group consisting of F, Cl, Br, and I.

FIG. 1

**Description**

Technical Field

The present disclosure relates to a battery.

Background Art

Patent Literature 1 discloses a negative-electrode material composed of a negative-electrode active material lithium titanate and a solid electrolyte formed of a halide, and an all-solid-state battery utilizing the negative-electrode material.

Citation List

Patent Literature

PTL 1: International Publication No. WO 2019/146295

Summary of Invention

Technical Problem

A known battery disclosed in Patent Literature 1 has room for improvement in output characteristics.
The present disclosure provides a battery with improved output characteristics. Solution to Problem
A battery according to the present disclosure includes

a positive-electrode layer,
a negative-electrode layer, and
an electrolyte layer between the positive-electrode layer and the negative-electrode layer,
wherein the negative-electrode layer includes a negative-electrode active material and a first solid electrolyte,
the electrolyte layer contains a second solid electrolyte,
the negative-electrode active material contains Li, Ti, and O,
the first solid electrolyte contains a crystalline phase assigned to a monoclinic crystal and contains Li, M1, and X1,
wherein M1 denotes at least one selected from the group consisting of metal elements and metalloid elements other than Li, and
X1 denotes at least one selected from the group consisting of F, Cl, Br, and I, and
the second solid electrolyte contains a crystalline phase assigned to a trigonal crystal and contains Li, M2, and X2,
wherein M2 denotes at least one selected from the group consisting of metal elements and metalloid elements other than Li, and
X2 denotes at least one selected from the group consisting of F, Cl, Br, and I. Advantageous Effects of Invention

The present disclosure can provide a battery with improved output characteristics.

Brief Description of Drawings

[Fig. 1] Fig. 1 is a cross-sectional view of a battery according to an embodiment of the present disclosure.
[Fig. 2] Fig. 2 is a schematic view of a press forming die used to evaluate the ionic conductivity of a solid electrolyte.
[Fig. 3] Fig. 3 is a graph showing the results of an initial charge-discharge test of a battery according to Example 2.

Description of Embodiments

(Underlying Knowledge Forming Basis of the Present Disclosure)

Patent Literature 1 described in [Background Art] discloses a battery including a negative-electrode layer formed from a negative-electrode material composed of a negative-electrode active material lithium titanate and a solid electrolyte formed of a halide. Further improvement in output characteristics is required for such a known battery including a negative-electrode layer containing a negative-electrode active material and a solid electrolyte. Accordingly, the present inventors have made extensive studies on the improvement of the output characteristics of a battery with such a structure. As a result, the present inventors have newly found that solid electrolytes used for a negative-electrode layer and an electrolyte layer have a combination of solid electrolytes suitable for improving charge-discharge rate performance and that the combination of the solid electrolytes can improve the output characteristics of the battery. The present inventors have completed a battery according to the present disclosure described below.

(Outline of One Aspect of the Present Disclosure)

A battery according to a first aspect of the present disclosure includes

a positive-electrode layer,
a negative-electrode layer, and
an electrolyte layer between the positive-electrode layer and the negative-electrode layer,
wherein the negative-electrode layer includes a negative-electrode active material and a first solid electrolyte,
the electrolyte layer contains a second solid electrolyte,
the negative-electrode active material contains Li, Ti, and O,
the first solid electrolyte contains a crystalline phase assigned to a monoclinic crystal and contains Li, M1, and X1,
wherein M1 denotes at least one selected from the group consisting of metal elements and metalloid elements other than Li, and
X1 denotes at least one selected from the group consisting of F, Cl, Br, and I, and
the second solid electrolyte contains a crystalline phase assigned to a trigonal crystal and contains Li, M2, and X2,
wherein M2 denotes at least one selected from the group consisting of metal elements and metalloid elements other than Li, and
X2 denotes at least one selected from the group consisting of F, Cl, Br, and I.

In the battery according to the first aspect, the negative-electrode layer and the electrolyte layer both contain a solid electrolyte of a halide containing at least one selected from the group consisting of F, Cl, Br, and I. Furthermore, the first solid electrolyte in the negative-electrode layer contains a crystalline phase assigned to a monoclinic crystal, and the second solid electrolyte in the electrode layer contains a crystalline phase assigned to a trigonal crystal. The charge-discharge rate performance of the battery can be improved when the first solid electrolyte in the negative-electrode layer and the second solid electrolyte in the electrolyte layer have such a structure. Thus, the battery according to the first aspect has improved output characteristics.

According to a second aspect of the present disclosure, for example, the first solid electrolyte in the battery according to the first aspect may be substantially free of sulfur.

A battery according to the second aspect has high safety.

According to a third aspect of the present disclosure, for example, the second solid electrolyte in the battery according to the first or second aspect may be substantially free of sulfur.

A battery according to the third aspect has high safety.

According to a fourth aspect of the present disclosure, for example, X1 in the battery according to any one of the first to third aspects may be at least one selected from the group consisting of Cl, Br, and I.

A battery according to the fourth aspect has further improved output characteristics.

According to a fifth aspect of the present disclosure, for example, X1 in the battery according to any one of the first to fourth aspects may contain Br.

A battery according to the fifth aspect has further improved output characteristics.

According to a sixth aspect of the present disclosure, for example, the first solid electrolyte in the battery according to any one of the first to fifth aspects may be represented by the formula (1):

$$Li_{\alpha 1}M1_{\beta 1}X1_{\gamma 1} \qquad \text{formula (1)}$$

wherein $\alpha 1$, $\beta 1$, and $\gamma 1$ each independently denote a value greater than 0.

A battery according to the sixth aspect has further improved output characteristics.

According to a seventh aspect of the present disclosure, for example, M1 in the battery according to any one of the first to sixth aspects may contain Y.

A battery according to the seventh aspect has further improved output characteristics.

According to an eighth aspect of the present disclosure, for example, the formulae

$$2.5 \leq \alpha1 \leq 3.5,$$

$$0.5 \leq \beta1 \leq 1.5,$$

and

$$\gamma1 = 6$$

may be satisfied in the formula (1) in the battery according to the seventh aspect.

A battery according to the eighth aspect has further improved output characteristics.

According to a ninth aspect of the present disclosure, for example, the first solid electrolyte in the battery according to any one of the first to eighth aspects may be at least one selected from the group consisting of $Li_3YBr_6$, $Li_3YBr_2Cl_4$, and $Li_3YBr_2Cl_2I_2$.

A battery according to the ninth aspect has further improved output characteristics.

According to a tenth aspect of the present disclosure, for example, X2 in the battery according to any one of the first to ninth aspects may be at least one selected from the group consisting of Cl, Br, and I.

A battery according to the tenth aspect has further improved output characteristics.

According to an eleventh aspect of the present disclosure, for example, X2 in the battery according to any one of the first to tenth aspects may contain Cl.

A battery according to the eleventh aspect has further improved output characteristics.

According to a twelfth aspect of the present disclosure, for example, the second solid electrolyte in the battery according to any one of the first to eleventh aspects may be represented by the formula (2):

$$Li_{\alpha2}M2_{\beta2}X2_{\gamma2} \qquad \text{formula (2)}$$

wherein $\alpha2$, $\beta2$, and $\gamma2$ each independently denote a value greater than 0.

A battery according to the twelfth aspect has further improved output characteristics.

According to a thirteenth aspect of the present disclosure, for example, M2 in the battery according to any one of the first to twelfth aspects may contain Y.

A battery according to the thirteenth aspect has further improved output characteristics.

According to a fourteenth aspect of the present disclosure, for example, the formulae

$$2.5 \leq \alpha2 \leq 3.5,$$

$$0.5 \leq \beta2 \leq 1.5,$$

and

$$\gamma2 = 6$$

may be satisfied in the formula (2) in the battery according to the thirteenth aspect.

A battery according to the fourteenth aspect has further improved output characteristics.

According to a fifteenth aspect of the present disclosure, for example, M2 in the battery according to any one of the first to fourteenth aspects may contain Y, Ca, and Gd.

A battery according to the fifteenth aspect has further improved output characteristics.

According to a sixteenth aspect of the present disclosure, for example, the second solid electrolyte in the battery according to the fifteenth aspect may be represented by the formula (3):

$$Li_{6-2a-3d}Ca_a(Y_{1-b}Gd_b)_dBr_{6-c}Cl_c \qquad (3)$$

wherein the formulae

$$0 < a < 3,$$

$$0 < b < 1, 0 < c < 6,$$

and

$$0 < d < 1.5$$

are satisfied.

A battery according to the sixteenth aspect has further improved output characteristics.

According to a seventeenth aspect of the present disclosure, for example, the second solid electrolyte in the battery according to the sixteenth aspect may be $Li_{2.8}Ca_{0.1}Y_{0.6}Gd_{0.4}Br_2Cl_4$.

A battery according to the seventeenth aspect has further improved output characteristics.

According to an eighteenth aspect of the present disclosure, for example, the negative-electrode active material in the battery according to any one of the first to seventeenth aspects may be lithium titanium oxide.

A battery according to the eighteenth aspect has further improved output characteristics.

According to a nineteenth aspect of the present disclosure, for example, the negative-electrode active material in the battery according to the eighteenth aspect may be $Li_4Ti_5O_{12}$.

A battery according to the nineteenth aspect has further improved output characteristics.

According to a twentieth aspect of the present disclosure, for example, the positive-electrode layer in the battery according to any one of the first to nineteenth aspects may contain a lithium nickel cobalt manganese oxide.

A battery according to the twentieth aspect can have improved charge-discharge capacity.

(Embodiments of the Present Disclosure)

Embodiments of the present disclosure are described below with reference to the accompanying drawings. The present disclosure is not limited to these embodiments.

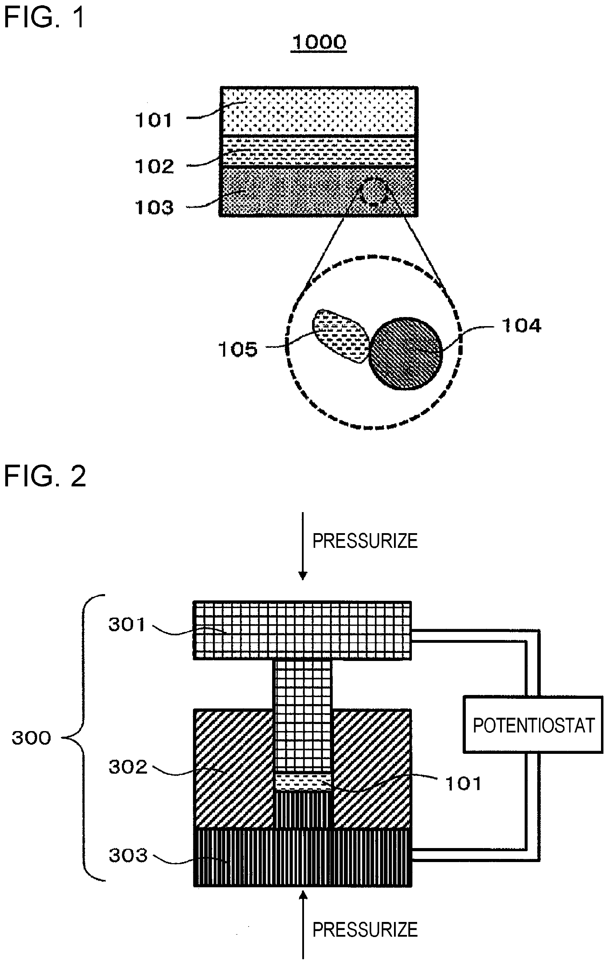

Fig. 1 is a cross-sectional view of a battery according to an embodiment of the present disclosure.

A battery 1000 according to the present embodiment includes a positive-electrode layer 101, a negative-electrode layer 103, and an electrolyte layer 102. The electrolyte layer 102 is located between the positive-electrode layer 101 and the negative-electrode layer 103.

The negative-electrode layer 103 contains a negative-electrode active material and a first solid electrolyte. The negative-electrode active material contains Li, Ti, and O. The first solid electrolyte contains a crystalline phase assigned to a monoclinic crystal and contains Li, M1, and X1. M1 denotes at least one selected from the group consisting of metal elements and metalloid elements other than Li, and X1 denotes at least one selected from the group consisting of F, Cl, Br, and I.

The electrolyte layer 102 contains a second solid electrolyte. The second solid electrolyte contains a crystalline phase assigned to a trigonal crystal and contains Li, M2, and X2. M2 denotes at least one selected from the group consisting of metal elements and metalloid elements other than Li, and X2 denotes at least one selected from the group consisting of F, Cl, Br, and I.

The term "metal elements", as used herein, refers to (i) all elements of groups 1 to 12 of the periodic table (except hydrogen) and (ii) all elements of groups 13 to 16 of the periodic table (except B, Si, Ge, As, Sb, Te, C, N, P, O, S, and Se). Thus, the metal elements are a group of elements that can become a cation when forming an inorganic compound with a halide.

The term "metalloid elements", as used herein, refers to B, Si, Ge, As, Sb, and Te.

The term "monoclinic crystal", as used herein, refers to a crystalline phase that has a crystal structure similar to $Li_3ErBr_6$ disclosed in the inorganic crystal structure database (ICSD) No. 50182 and that has an X-ray diffraction pattern specific to this crystal structure. Thus, the presence of a monoclinic crystal in the solid electrolyte is determined on the basis of an X-ray diffraction pattern. A diffraction angle and/or a peak intensity ratio in a diffraction pattern may vary from those of $Li_3ErBr_6$ depending on the type of element contained in the first solid electrolyte. The phrase "has a crystal structure similar to", as used herein, refers to being classified into the same space group and having a close atomic arrangement structure and does not limit the lattice constant.

The term "trigonal crystal", as used herein, refers to a crystalline phase that has a crystal structure similar to $Li_3ErCl_6$ disclosed in the inorganic crystal structure database (ICSD) No. 50151 and that has an X-ray diffraction pattern specific to this crystal structure. Thus, the presence of a trigonal crystal in the solid electrolyte is determined on the basis of an X-ray diffraction pattern. A diffraction angle and/or a peak intensity ratio in a diffraction pattern may vary from those of $Li_3ErCl_6$ depending on the type of element contained in the first solid electrolyte.

In the battery 1000 according to the present embodiment, as described above, the negative-electrode layer 103 and the electrolyte layer 102 both contain a solid electrolyte of a halide containing at least one selected from the group consisting of F, Cl, Br, and I. Furthermore, the first solid electrolyte in the negative-electrode layer 103 contains a crystalline phase assigned to a monoclinic crystal, and the second solid electrolyte in the electrolyte layer 102 contains a crystalline phase assigned to a trigonal crystal. When the first solid electrolyte in the negative-electrode layer 103 and the second solid electrolyte in the electrolyte layer 102 have such a structure, the battery 1000 can have improved charge-discharge rate performance. This improves the output characteristics of the battery 1000.

The first solid electrolyte contains Li, M1, and X1. A solid electrolyte composed of these elements and having a monoclinic crystal structure has a relatively low grain boundary resistance, is relatively soft, has good filling properties, and is less likely to have reduced ionic conductivity even when ground. Thus, even when the first solid electrolyte containing the crystalline phase assigned to the monoclinic crystal is mixed with the negative-electrode active material and is ground, the first solid electrolyte can maintain the ionic conductivity of the material itself. The negative-electrode active material containing Li, Ti, and O used for the negative-electrode layer 103 is a relatively hard material. Even when the first solid electrolyte is mixed with such a hard negative-electrode active material and is ground, the first solid electrolyte can maintain the ionic conductivity of the material itself and is rarely degraded. Thus, the negative-electrode layer 103 has improved electrode performance.

The second solid electrolyte contains Li, M2, and X2. A solid electrolyte composed of these elements and having a trigonal crystal structure has higher grain boundary resistance than a solid electrolyte having a monoclinic crystal structure and tends to have reduced ionic conductivity when ground. However, the solid electrolyte composed of these elements and having a trigonal crystal structure has high ionic conductivity of the material itself. The solid electrolyte constituting the electrolyte layer 102 is typically used without being mixed with another hard material, such as an electrode active material, or being ground. Thus, the second solid electrolyte containing the crystalline phase assigned to the trigonal crystal having relatively high ionic conductivity of the material itself can improve the ionic conductivity of the electrolyte layer 102.

As described above, in the battery 1000 according to the present embodiment, the negative-electrode layer 103 contains the first solid electrolyte that generally has slightly lower ionic conductivity of the material itself but that has relatively low grain boundary resistance and is less likely to have reduced ionic conductivity even when ground. On the other hand, the electrolyte layer 102 contains the second solid electrolyte that generally tends to have reduced ionic conductivity when ground but that has high ionic conductivity of the material itself. The combined use of such solid electrolytes as the solid electrolytes of the negative-electrode layer 103 and the electrolyte layer 102 improves the ionic conductivity of the negative-electrode layer 103 and the electrolyte layer 102. This improves the charge-discharge rate performance and the output characteristics of the battery 1000.

An example of the battery 1000 according to the present embodiment is an all-solid-state battery. The all-solid-state battery may be a primary battery or a secondary battery.

Components of the battery 1000 according to the present embodiment are described in more detail below.

(Negative-Electrode Layer)

As described above, the negative-electrode layer 103 contains the first solid electrolyte containing Li, M1, and X1. The first solid electrolyte contains a crystalline phase assigned to a monoclinic crystal. For example, a main crystalline phase in the first solid electrolyte may be a crystalline phase assigned to a monoclinic crystal. The first solid electrolyte may have a monoclinic crystal structure. The first solid electrolyte may contain another crystalline phase not assigned to a monoclinic crystal. Here, for example, in the first solid electrolyte, the crystalline phase assigned to the monoclinic crystal can be identified as a main crystalline phase from a peak observed in an X-ray diffraction pattern of the first solid electrolyte.

The first solid electrolyte may consist essentially of Li, M1, and X1. The phrase "the first solid electrolyte consists essentially of Li, M1, and X1" means that the ratio (that is, mole fraction) of the sum of the amounts of Li, M1, and X1 to the sum of the amounts of all the elements constituting the solid electrolyte in the first solid electrolyte is 90% or more. For example, the ratio (that is, mole fraction) may be 95% or more. The first solid electrolyte may be composed of only Li, M1, and X1.

To increase the ionic conductivity, M1 may contain at least one element selected from the group consisting of group 1 elements, group 2 elements, group 3 elements, group 4 elements, and lanthanoid elements. To increase the ionic conductivity, M1 may contain at least one element selected from the group consisting of group 5 elements, group 12 elements, group 13 elements, and group 14 elements.

Examples of the group 1 elements include Na, K, Rb, and Cs. Examples of the group 2 elements include Mg, Ca, Sr, and Ba. Examples of the group 3 elements include Sc and Y. Examples of the group 4 elements include Ti, Zr, and Hf. Examples of the lanthanoid elements include La, Ce, Pr, Nd, Sm, Eu, Gd, Tb, Dy, Ho, Er, Tm, Yb, and Lu. Examples of the group 5 elements include Nb and Ta. Examples of the group 12 elements include Zn. Examples of the group 13 elements include Al, Ga, and In. Examples of the group 14 elements include Sn.

To further increase the ionic conductivity, M1 may contain at least one element selected from the group consisting of Na, K, Mg, Ca, Sr, Ba, Sc, Y, Zr, Hf, La, Ce, Pr, Nd, Sm, Eu, Gd, Tb, Dy, Ho, Er, Tm, Yb, and Lu.

To further increase the ionic conductivity, M1 may contain at least one element selected from the group consisting of Mg, Ca, Sr, Y, Sm, Gd, Dy, and Hf.

To further increase the ionic conductivity and to improve the output characteristics, M1 may contain Y.

To further improve the output characteristics, X1 may contain at least one element selected from the group consisting of Cl, Br, and I.

To further improve the output characteristics, X1 may contain at least two elements selected from the group consisting of Cl, Br, and I.

To further improve the output characteristics, X1 may contain Cl, Br, and I.

As described above, the first solid electrolyte contains the crystalline phase assigned to the monoclinic crystal. In order for the solid electrolyte containing Li, M1, and X1 to easily contain the crystalline phase assigned to the monoclinic crystal, X1 may contain Br. A monoclinic crystal structure is easily formed, for example, when the anion X1 is relatively large. Thus, when X1 contains Br, a stable monoclinic crystal structure is easily formed, and the first solid electrolyte can stably contain the crystalline phase assigned to the monoclinic crystal. This can further improve the output characteristics.

The first solid electrolyte may be represented by the formula (1):

$$Li_{\alpha 1} M1_{\beta 1} X1_{\gamma 1} \qquad \text{formula (1)}$$

wherein $\alpha 1$, $\beta 1$, and $\gamma 1$ each independently denote a value greater than 0.

For example, when M1 contains Y, the formulae

$$2.5 \le \alpha 1 \le 3.5,$$

$$0.5 \le \beta 1 \le 1.5,$$

and

$$\gamma 1 = 6$$

may be satisfied in the formula (1).

The first solid electrolyte may be $Li_3 Y X1_6$.

The first solid electrolyte may be $Li_3 Y Br_6$ or $Li_3 Y Br_x Cl_y I_{6-x-y}$, wherein x and y satisfy $0 < x < 6$, $0 < y < 6$, and $0 < x + y \le 6$.

The first solid electrolyte may be at least one selected from the group consisting of $Li_3 Y Br_6$, $Li_3 Y Br_2 Cl_4$, and $Li_3 Y Br_2 Cl_2 I_2$. The first solid electrolyte made of these materials can stably contain the crystalline phase assigned to the monoclinic crystal and can maintain high ionic conductivity even when ground. This can further improve the output characteristics.

The first solid electrolyte may be of any shape. The shape of the first solid electrolyte may be, for example, a needle-like shape, a spherical shape, an ellipsoidal shape, or a fibrous shape. For example, the first solid electrolyte may be particulate. The first solid electrolyte may be formed in a pellet or sheet shape.

To further increase the ionic conductivity and to form a good dispersion state with another material, such as the negative-electrode active material, for example, when the first solid electrolyte is particulate (for example, spherical), the first solid electrolyte may have a median size of 0.1 $\mu$m or more and 100 $\mu$m or less. The median size means the particle size at which the cumulative volume in the volumetric particle size distribution is equal to 50%. The volumetric particle size distribution can be measured with a laser diffraction measuring apparatus or an image analyzer.

The median size may be 0.5 $\mu$m or more and 10 $\mu$m or less. The first solid electrolyte with such a median size has high ionic conductivity.

The first solid electrolyte is, for example, substantially free of sulfur. The phrase "the first solid electrolyte is substantially free of sulfur" means that the first solid electrolyte is free of sulfur as a constituent element except for sulfur inevitably mixed therewith as an impurity. In this case, the amount of sulfur mixed with the first solid electrolyte as an impurity is, for example, 1% by mole or less. The first solid electrolyte may be free of sulfur. The first solid electrolyte free of sulfur does not produce hydrogen sulfide even when exposed to the atmosphere, and therefore has high safety.

As illustrated in Fig. 1, the negative-electrode layer 103 may contain a negative-electrode active material particle 104 and a first solid electrolyte particle 105.

The negative-electrode active material particle 104 may have a median size of 0.1 $\mu$m or more and 100 $\mu$m or less. When the negative-electrode active material particle 104 has a median size of 0.1 $\mu$m or more, the negative-electrode active material particle 104 and the first solid electrolyte particle 105 in the negative-electrode layer 103 have a good dispersion state. This improves the charge-discharge characteristics of the battery 1000. The negative-electrode active material particle 104 with a median size of 100 $\mu$m or less has an improved lithium diffusion rate therein. This allows the battery 1000 to operate at high output power.

The negative-electrode active material particle 104 may have a larger median size than the first solid electrolyte particle 105. This improves the dispersion state of the negative-electrode active material particle 104 and the first solid electrolyte particle 105 in the negative-electrode layer 103.

In the negative-electrode layer 103 according to the present embodiment, the first solid electrolyte particle 105 may be in contact with the negative-electrode active material particle 104, as illustrated in Fig. 1.

The negative-electrode layer 103 according to the present embodiment may contain a plurality of the first solid electrolyte particles 105 and a plurality of the negative-electrode active material particles 104.

In the negative-electrode layer 103 according to the present embodiment, the first solid electrolyte particle 105 content may be the same as or different from the negative-electrode active material particle 104 content.

In the negative-electrode layer 103, the volume ratio Vn of the volume of the negative-electrode active material particle to the total volume of the negative-electrode active material particle 104 and the first solid electrolyte particle 105 may be 0.3 or more and 0.95 or less. At a volume ratio Vn of 0.3 or more, the battery 1000 can have an improved energy density. On the other hand, at a volume ratio Vn of 0.95 or less, the battery 1000 can have improved output.

The negative-electrode layer 103 may have a thickness of 10 $\mu$m or more and 500 $\mu$m or less.

When the negative-electrode layer 103 has a thickness of 10 $\mu$m or more, the battery 1000 can have a sufficient energy density. When the negative-electrode layer 103 has a thickness of 500 $\mu$m or less, the battery 1000 can have improved output.

The negative-electrode layer 103 may further contain another solid electrolyte with a composition or a crystal structure different from that of the first solid electrolyte. In such a case, the mass of the first solid electrolyte may be 1% by mass or more or 50% by mass or more of the total mass of solid electrolytes contained in the negative-electrode layer 103. Examples of the solid electrolyte with a composition different from that of the first solid electrolyte include solid sulfide electrolytes, solid oxide electrolytes, solid polymer electrolytes, and complex hydride solid electrolytes. Examples of the solid sulfide electrolytes, the solid oxide electrolytes, the solid polymer electrolytes, and the complex hydride solid electrolytes are the same as examples of solid electrolytes that can be used for the positive-electrode layer 101 described later.

As described above, the negative-electrode active material in the negative-electrode layer 103 contains Li, Ti, and O. To improve the output characteristics of the battery 1000, the negative-electrode active material may be, for example, lithium titanium oxide, and may be, for example, $Li_4Ti_5O_{12}$.

(Electrolyte Layer)

The electrolyte layer 102 contains a second solid electrolyte. The second solid electrolyte contains Li, M2, and X2. The second solid electrolyte contains a crystalline phase assigned to a trigonal crystal. For example, a main crystalline phase in the second solid electrolyte may be a crystalline phase assigned to a trigonal crystal. The second solid electrolyte may have a trigonal crystal structure. The second solid electrolyte may contain another crystalline phase not assigned to a trigonal crystal. Here, for example, in the second solid electrolyte, the crystalline phase assigned to the trigonal crystal can be identified as a main crystalline phase from a peak observed in an X-ray diffraction pattern of the second solid electrolyte.

The second solid electrolyte may consist essentially of Li, M2, and X2. The phrase "the second solid electrolyte consists essentially of Li, M2, and X2" means that the ratio (that is, mole fraction) of the sum of the amounts of Li, M2, and X2 to the sum of the amounts of all the elements constituting the solid electrolyte in the second solid electrolyte is 90% or more. For example, the ratio (that is, mole fraction) may be 95% or more. The second solid electrolyte may be composed of only Li, M2, and X2.

To increase the ionic conductivity, M2 may contain at least one element selected from the group consisting of group 1 elements, group 2 elements, group 3 elements, group 4 elements, and lanthanoid elements. To increase the ionic conductivity, M2 may contain at least one element selected from the group consisting of group 5 elements, group 12 elements, group 13 elements, and group 14 elements.

Examples of the group 1 elements include Na, K, Rb, and Cs. Examples of the group 2 elements include Mg, Ca, Sr, and Ba. Examples of the group 3 elements include Sc and Y. Examples of the group 4 elements include Ti, Zr, and Hf. Examples of the lanthanoid elements include La, Ce, Pr, Nd, Sm, Eu, Gd, Tb, Dy, Ho, Er, Tm, Yb, and Lu. Examples of the group 5 elements include Nb and Ta. Examples of the group 12 elements include Zn. Examples of the group 13 elements include Al, Ga, and In. Examples of the group 14 elements include Sn.

To further increase the ionic conductivity, M2 may contain at least one element selected from the group consisting of Na, K, Mg, Ca, Sr, Ba, Sc, Y, Zr, Hf, La, Ce, Pr, Nd, Sm, Eu, Gd, Tb, Dy, Ho, Er, Tm, Yb, and Lu.

To further increase the ionic conductivity, M2 may contain at least one element selected from the group consisting of Mg, Ca, Sr, Y, Sm, Gd, Dy, and Hf.

To further increase the ionic conductivity and to improve the output characteristics, M2 may contain Y.

To further improve the output characteristics, X2 may contain at least one element selected from the group consisting of Br, Cl, and I.

To further improve the output characteristics, X2 may contain at least two elements selected from the group consisting of Cl, Br, and I.

To further improve the output characteristics, X2 may contain Cl, Br, and I.

As described above, the second solid electrolyte contains the crystalline phase assigned to the trigonal crystal. In order for the solid electrolyte containing Li, M2, and X2 to easily contain the crystalline phase assigned to the trigonal crystal, X2 may contain Cl. A trigonal crystal structure is easily formed, for example, when the anion X2 is relatively small. Thus, when X2 contains Cl, a stable trigonal crystal structure is easily formed, and the second solid electrolyte can stably contain the crystalline phase assigned to the trigonal crystal. This can further improve the output characteristics.

The second solid electrolyte may be represented by the formula (2):

$$Li_{\alpha 2}M2_{\beta 2}X2_{\gamma 2} \qquad \text{formula (2)}$$

wherein $\alpha 2$, $\beta 2$, and $\gamma 2$ each independently denote a value greater than 0.

For example, when M2 contains Y, the formulae

$$2.5 \le \alpha 2 \le 3.5,$$

$$0.5 \le \beta 2 \le 1.5,$$

and

$$\gamma 2 = 6$$

may be satisfied in the formula (2).

To further improve the output characteristics, M2 may contain Y, Ca, and Gd.

For example, when M2 contains Y, Ca, and Gd, the second solid electrolyte may be represented by the formula (3):

$$Li_{6-2a-3d}Ca_a(Y_{1-b}Gd_b)_dBr_{6-c}Cl_c \qquad (3)$$

wherein the formulae

$$0 < a < 3,$$

$$0 < b < 1,$$

$$0 < c < 6,$$

and

$$0 < d < 1.5$$

may be satisfied.

The second solid electrolyte may be $Li_{2.8}Ca_{0.1}Y_{0.6}Gd_{0.4}Br_2Cl_4$. The second solid electrolyte made of this material can stably contain the crystalline phase assigned to the trigonal crystal. This can further improve the output characteristics.

The second solid electrolyte may be of any shape. The shape of the second solid electrolyte may be, for example, a needle-like shape, a spherical shape, an ellipsoidal shape, or a fibrous shape. For example, the second solid electrolyte may be particulate. The second solid electrolyte may be formed in a pellet or sheet shape.

To further increase the ionic conductivity, for example, when the second solid electrolyte is particulate (for example, spherical), the second solid electrolyte may have a median size of 0.1 $\mu$m or more and 100 $\mu$m or less. The median size means the particle size at which the cumulative volume in the volumetric particle size distribution is equal to 50%. The volumetric particle size distribution can be measured with a laser diffraction measuring apparatus or an image analyzer.

The median size may be 0.5 $\mu$m or more and 10 $\mu$m or less. The second solid electrolyte with such a median size has high ionic conductivity.

The second solid electrolyte is, for example, substantially free of sulfur. The phrase "the second solid electrolyte is substantially free of sulfur" means that the second solid electrolyte is free of sulfur as a constituent element except for sulfur inevitably mixed therewith as an impurity. In this case, the amount of sulfur mixed with the second solid electrolyte as an impurity is, for example, 1% by mole or less. The second solid electrolyte may be free of sulfur. The second solid electrolyte free of sulfur does not produce hydrogen sulfide even when exposed to the atmosphere, and therefore has high safety.

The electrolyte layer 102 may contain the second solid electrolyte as a main component. In other words, the electrolyte layer 102 may contain the second solid electrolyte, for example, at a mass fraction of 50% or more (that is, 50% by mass or more) of the entire electrolyte layer.

The electrolyte layer 102 may contain the second solid electrolyte, for example, at a mass fraction of 70% or more (that is, 70% by mass or more) of the entire electrolyte layer 102.

The electrolyte layer 102 may further contain incidental impurities. The electrolyte layer 102 may contain a starting material used for the synthesis of the second solid electrolyte. The electrolyte layer 102 may contain a by-product or a decomposition product produced during the synthesis of the second solid electrolyte.

The mass ratio of the second solid electrolyte contained in the electrolyte layer 102 to the electrolyte layer 102 may be substantially 1. The phrase "the mass ratio is substantially 1" means that the mass ratio is 1 when calculated without considering incidental impurities that may be contained in the electrolyte layer 102. In other words, the electrolyte layer 102 may be composed of only the second solid electrolyte.

Thus, the electrolyte layer 102 may be composed of only the second solid electrolyte.

The electrolyte layer 102 may contain two or more of the materials described as the second solid electrolyte.

The electrolyte layer 102 may have a thickness of 1 $\mu$m or more and 300 $\mu$m or less.

The electrolyte layer 102 with a thickness of 1 $\mu$m or more can reduce the short circuit between the positive-electrode layer 101 and the negative-electrode layer 103. The electrolyte layer 102 with a thickness of 300 $\mu$m or less can provide the battery 1000 that can operate at high output power.

(Positive-Electrode Layer)

The positive-electrode layer 101 contains a material that can adsorb and desorb metal ions (for example, lithium ions). The positive-electrode layer 101 may contain a positive-electrode active material.

Examples of the positive-electrode active material include lithium-containing transition metal oxides, transition metal fluorides, polyanionic materials, fluorinated polyanionic materials, transition metal sulfides, transition metal oxyfluorides, transition metal oxysulfides, and transition metal oxynitrides. Examples of the lithium-containing transition metal oxides include $Li(NiCoAl)O_2$, $Li(NiCoMn)O_2$, and $LiCoO_2$. In particular, the use of a lithium-containing transition metal oxide as the positive-electrode active material can reduce production costs and increase the average discharge voltage.

To improve the charge-discharge capacity, the positive-electrode active material may be lithium nickel cobalt manganese oxide.

The positive-electrode layer 101 may contain a solid electrolyte. Such a structure can increase lithium ion conductivity in the positive-electrode layer 101 and enables operation at high output power.

Examples of the solid electrolyte in the positive-electrode layer 101 include solid halide electrolytes, solid sulfide electrolytes, solid oxide electrolytes, solid polymer electrolytes, and complex hydride solid electrolytes.

The solid halide electrolytes may be, for example, the materials exemplified above as the first solid electrolyte and the second solid electrolyte.

Examples of the solid sulfide electrolytes include $Li_2S\text{-}P_2S_5$, $Li_2S\text{-}SiS_2$, $Li_2S\text{-}B_2S_3$, $Li_2S\text{-}GeS_2$, $Li_{3.25}Ge_{0.25}P_{0.75}S_4$, and $Li_{10}GeP_2S_{12}$. LiX', $Li_2O$, M'Oq, LipM'Oq, or the like may be added to these. X' denotes at least one selected from the group consisting of F, Cl, Br, and I. M' denotes at least one selected from the group consisting of P, Si, Ge, B, Al, Ga, In, Fe, and Zn. p and q denote a natural number.

Examples of the solid oxide electrolytes include:

(i) NASICON-type solid electrolytes, such as $LiTi_2(PO_4)_3$ and element-substituted products thereof,
(ii) perovskite-type solid electrolytes, such as $(LaLi)TiO_3$,
(iii) LISICON-type solid electrolytes, such as $Li_{14}ZnGe_4O_{16}$, $Li_4SiO_4$, $LiGeO_4$, and element-substituted products thereof,
(iv) garnet-type solid electrolytes, such as $Li_7La_3Zr_2O_{12}$ and element-substituted products thereof,
(v) $Li_3PO_4$ and N-substituted products thereof,
(vi) $Li_3N$ and H-substituted products thereof, and
(vii) glasses and glass ceramics based on a Li-B-O compound, such as $LiBO_2$ or $Li_3BO_3$, to which $Li_2SO_4$, $Li_2CO_3$, or the like is added.

Examples of the solid polymer electrolytes include polymers and lithium salt compounds.

The polymers may have an ethylene oxide structure. A polymer with an ethylene oxide structure can contain a large amount of lithium salt and can further increase the ionic conductivity.

Examples of the lithium salt include $LiPF_6$, $LiBF_4$, $LiSbF_6$, $LiAsF_6$, $LiSO_3CF_3$, $LiN(SO_2CF_3)_2$, $LiN(SO_2C_2F_5)_2$, $LiN(SO_2CF_3)(SO_2C_4F_9)$, and $LiC(SO_2CF_3)_3$. One lithium salt selected from these may be used alone. Alternatively, a mixture of two or more lithium salts selected from these may be used.

Examples of the complex hydride solid electrolytes include $LiBH_4\text{-}LiI$ and $LiBH_4\text{-}P_2S_5$.

Positive-electrode active material particles may have a median size of 0.1 $\mu$m or more and 100 $\mu$m or less. When the positive-electrode active material particles have a median size of 0.1 $\mu$m or more, the positive-electrode active material particles and solid electrolyte particles in the positive-electrode layer 101 have a good dispersion state. This improves the charge-discharge characteristics of the battery 1000. The positive-electrode active material particles with a median size of 100 $\mu$m or less have an improved lithium diffusion rate therein. This allows the battery 1000 to operate at high output power.

The positive-electrode active material particles may have a larger median size than the solid electrolyte particles. This enables the positive-electrode active material particles and the solid electrolyte particles to form a good dispersion state.

In the positive-electrode layer 101, the volume ratio Vp of the volume of the positive-electrode active material particles to the total volume of the positive-electrode active material particles and the solid electrolyte particles may be 0.3 or more and 0.95 or less. At a volume ratio Vp of 0.3 or more, the battery 1000 can have an improved energy density. On the other hand, at a volume ratio Vp of 0.95 or less, the battery 1000 can have improved output.

The positive-electrode layer 101 may have a thickness of 10 $\mu$m or more and 500 $\mu$m or less.

When the positive-electrode layer 101 has a thickness of 10 $\mu$m or more, the battery 1000 can have a sufficient energy density. When the positive-electrode layer 101 has a thickness of 500 $\mu$m or less, the battery 1000 can have improved output.

The positive-electrode active material may be covered. A material with low electronic conductivity can be used as a covering material. The covering material may be an oxide material, a solid oxide electrolyte, or the like.

Examples of the oxide material include $SiO_2$, $Al_2O_3$, $TiO_2$, $B_2O_3$, $Nb_2O_5$, $WO_3$, and $ZrO_2$.

Examples of the solid oxide electrolyte include

(i) Li-Nb-O compounds, such as $LiNbO_3$,
(ii) Li-B-O compounds, such as $LiBO_2$ and $Li_3BO_3$,
(iii) Li-Al-O compounds, such as $LiAlO_2$,
(iv) Li-Si-O compounds, such as $Li_4SiO_4$,
(v) Li-S-O compounds, such as $Li_2SO_4$,
(vi) Li-Ti-O compounds, such as $Li_4Ti_5O_{12}$,
(vii) Li-Zr-O compounds, such as $Li_2ZrO_3$,
(viii) Li-Mo-O compounds, such as $Li_2MoO_3$,
(ix) Li-V-O compounds, such as $LiV_2O_5$, and
(x) Li-W-O compounds, such as $Li_2WO_4$.

Solid oxide electrolytes have high ionic conductivity and high high-potential stability. Thus, the use of a solid oxide electrolyte can further improve the charge-discharge efficiency.

To improve the adhesion between particles, at least one selected from the group consisting of the positive-electrode layer 101, the electrolyte layer 102, and the negative-electrode layer 103 may contain a binder. The binder is used to improve the binding property of a material constituting the electrode.

Examples of the binder include poly(vinylidene difluoride), polytetrafluoroethylene, polyethylene, polypropylene, aramid resin, polyamide, polyimide, polyamideimide, polyacrylonitrile, poly(acrylic acid), poly(methyl acrylate), poly(ethyl acrylate), poly(hexyl acrylate), poly(methacrylic acid), poly(methyl methacrylate), poly(ethyl methacrylate), poly(hexyl methacrylate), poly(vinyl acetate), polyvinylpyrrolidone, polyether, poly(ether sulfone), hexafluoropolypropylene, styrenebutadiene rubber, and carboxymethylcellulose.

The binder may also be a copolymer of two or more materials selected from the group consisting of tetrafluoroethylene, hexafluoroethylene, hexafluoropropylene, perfluoroalkyl vinyl ether, vinylidene fluoride, chlorotrifluoroethylene, ethylene, propylene, pentafluoropropylene, fluoromethyl vinyl ether, acrylic acid, and hexadiene.

Two or more binders may be used.

At least one selected from the group consisting of the positive-electrode layer 101 and the negative-electrode layer 103 may contain a conductive aid to increase electronic conductivity.

Examples of the conductive aid include

(i) graphites, such as natural graphite and artificial graphite,
(ii) carbon blacks, such as acetylene black and Ketjen black,
(iii) electrically conductive fibers, such as carbon fibers and metal fibers,
(iv) fluorocarbons,
(v) metal powders, such as aluminum,
(vi) electrically conductive whiskers, such as zinc oxide and potassium titanate,
(vii) electrically conductive metal oxides, such as titanium oxide, and
(viii) electrically conductive polymers, such as polyaniline, polypyrrole, and polythiophene. To reduce the cost, the conductive aid (i) or (ii) may be used.

Examples of the shape of a battery according to the present embodiment include a coin shape, a cylindrical shape, a square or rectangular shape, a sheet shape, a button shape, a flat shape, and a layered shape.

Next, a method for producing the first solid electrolyte and the second solid electrolyte is described.

The first solid electrolyte and the second solid electrolyte are produced, for example, by the following method.

A raw material powder is prepared at a blend ratio of a desired composition. The raw material powder may be, for example, a halide. For example, LiBr, LiCl, and $YCl_3$ are prepared at a mole ratio of $LiBr:LiCl:YCl_3 = 2.0:1.0:1.0$ to prepare $Li_3YBr_2Cl_4$. Raw material powders may be mixed at a mole ratio adjusted in advance to compensate for a compositional change that may occur in a synthesis process.

The type of raw material powder is not limited to the above. For example, a combination of LiCl and $YBr_3$ or a complex anionic compound, such as $LiBr_{0.5}Cl_{0.5}$, may be used. A mixture of an oxygen-containing raw material powder (for example, an oxide, a hydroxide, a sulfate, or a nitrate) and a halide (for example, an ammonium halide) may be used.

Raw material powders are mixed well using a mortar and a pestle, a ball mill, or a mixer to prepare a mixed powder. The raw material powders are then ground by a mechanochemical milling method. The raw material powders are allowed to react in this manner to prepare the first solid electrolyte and the second solid electrolyte. Alternatively, after the raw material powders are well mixed, the mixed powder may be heat-treated in a vacuum or in an inert atmosphere to prepare the first and second solid electrolytes.

The heat treatment may be performed, for example, at 100°C or more and 650°C or less for one hour or more.

Thus, a solid electrolyte having a crystalline phase as described above is prepared.

The structure of a crystalline phase (that is, the crystal structure) in a solid electrolyte can depend on the selection of elements constituting the solid electrolyte (that is, M1, M2, X1, and X2), the ratio of constituent elements of the solid electrolyte, a method for reacting raw material powders, and reaction conditions.

For example, a monoclinic crystal structure is easily formed when halogen elements (that is, X1 and X2), which are anions, are relatively large. Thus, for example, when the anion contains Br, a stable monoclinic crystal structure is easily formed. For example, a trigonal crystal structure is easily formed when halogen elements (that is, X1 and X2), which are anions, are relatively small. Thus, for example, when the anion contains Cl, a stable trigonal crystal structure is easily formed. When M1 and M2 are each composed of a plurality of elements, the structure of the crystalline phase in the solid electrolyte can also be determined by adjusting the ratio of the plurality of elements. When X1 and X2 are each composed of a plurality of halogen elements, the structure of the crystalline phase in the solid electrolyte can also be determined by adjusting the ratio of the plurality of halogen elements.

EXAMPLES

The present disclosure is described in detail in the following examples.

[Example 1]

(Preparation of First Solid Electrolyte)

In a dry argon atmosphere with a dew point of -40°C or less, raw material powders LiBr, $YBr_3$, LiCl, and $YCl_3$ were weighed at a mole ratio of Li:Y:Br:Cl = 3:1:2:4. These were ground and mixed in a mortar. The mixture was then milled in a planetary ball mill (P-7 manufactured by Fritsch GmbH) at 600 rpm for 25 hours. Thus, a powder of a first solid electrolyte $Li_3YBr_2Cl_4$ of Example 1 was prepared.

(Evaluation of Composition of First Solid Electrolyte)

The composition of the first solid electrolyte of Example 1 was evaluated by inductive coupled plasma (ICP) emission spectroscopy. As a result, the deviation of Li/Y from the composition of the preparation was 3% or less. Thus, it can be said in Example 1 that the composition of the preparation in the planetary ball mill was almost the same as the composition of the first solid electrolyte thus prepared.

(Evaluation of Crystal Structure and Crystallinity of First Solid Electrolyte)

The powder of the first solid electrolyte of Example 1 was subjected to X-ray diffractometry in a dry argon atmosphere with a dew point of -40°C or less to obtain an X-ray diffraction pattern. The crystal structure was analyzed with an X-ray diffractometer (Rigaku Corporation, MiniFlex 600). Cu-K$\alpha$ radiation was used as an X-ray source. As a result of the evaluation by the X-ray diffraction (XRD) method, an X-ray diffraction pattern assigned to a monoclinic crystal was observed as a main crystalline phase.

(Evaluation of Ionic Conductivity)

Fig. 2 is a schematic view of a press forming die used to evaluate the ionic conductivity of a solid electrolyte.
The press forming die 300 had a punch top 301, a die 302, and a punch bottom 303. The punch top 301 and the punch bottom 303 were made of an electrically conductive stainless steel. The die 302 was made of an insulating polycarbonate.
The press forming die 300 illustrated in Fig. 2 was used to evaluate the ionic conductivity of the first solid electrolyte of Example 1 by the following method.
In a dry argon atmosphere with a dew point of -30°C or less, the press forming die 300 was filled with the powder of the first solid electrolyte of Example 1 (that is, a powder 201 of the solid electrolyte in Fig. 2). A pressure of 300 MPa was applied to the first solid electrolyte of Example 1 in the press forming die 300 via the punch top 301 and the punch bottom 303.
While the pressure is applied, the punch top 301 and the punch bottom 303 were coupled to a potentiostat (Princeton Applied Research, VersaSTAT4) equipped with a frequency-response analyzer. The punch top 301 was coupled to a working electrode and a potential measuring terminal. The punch bottom 303 was coupled to a counter electrode and a reference electrode. The impedance of the first solid electrolyte was measured at room temperature by an electrochemical impedance measurement method.
The ionic conductivity of the first solid electrolyte of Example 1 measured at 22°C was 1.5 x $10^{-3}$ S/cm.

(Preparation of Negative-Electrode Material)

In a dry argon atmosphere with a dew point of -40°C or less, the first solid electrolyte $Li_3YBr_2Cl_4$ of Example 1, a negative-electrode active material $Li_4Ti_5O_{12}$, and a conductive aid VGCF (vapor grown carbon fiber) were weighed at a mass ratio of $Li_4Ti_5O_{12}$:$Li_3YBr_2Cl_4$:VGCF = 10:85:5. These were mixed in an agate mortar to prepare a negative-electrode material of Example 1. VGCF is a registered trademark of Showa Denko K.K.

(Preparation of Second Solid Electrolyte)

In a dry argon atmosphere with a dew point of -40°C or less, LiCl, LiBr, $YCl_3$, $GdCl_3$, and $CaBr_2$ were prepared as raw material powders at a mole ratio of LiCl:LiBr:$YCl_3$:$GdCl_3$:$CaBr_2$ = 1:1.8:0.6:0.4:0.1. These raw material powders were ground and mixed in a mortar. Thus, a mixed powder was prepared. The mixed powder was milled at 600 rpm for 12 hours in a planetary ball mill (P-7 manufactured by Fritsch GmbH). A powder of a second solid electrolyte of Example 1 was thus prepared. The second solid electrolyte of Example 1 had a composition represented by $Li_{2.8}Ca_{0.1}Y_{0.6}Gd_{0.4}Br_2Cl_4$.

(Evaluation of Composition of Second Solid Electrolyte)

The composition of the second solid electrolyte of Example 1 was evaluated by inductive coupled plasma (ICP) emission spectroscopy. As a result, the deviation of Li/Y from the composition of the preparation was 3% or less. Thus, it can be said in Example 1 that the composition of the preparation in the planetary ball mill was almost the same as the composition of the second solid electrolyte thus prepared.

(Evaluation of Crystal Structure of Second Solid Electrolyte)

The powder of the second solid electrolyte of Example 1 was subjected to X-ray diffractometry in a dry argon atmosphere with a dew point of -40°C or less to obtain an X-ray diffraction pattern. The crystal structure was analyzed with an X-ray diffractometer (Rigaku Corporation, MiniFlex 600). Cu-K$\alpha$ radiation was used as an X-ray source. As a result of the evaluation by the X-ray diffraction (XRD) method, an X-ray diffraction pattern assigned to a trigonal crystal was observed as a main crystalline phase.

(Evaluation of Ionic Conductivity of Second Solid Electrolyte)

The ionic conductivity of the second solid electrolyte of Example 1 was measured in the same manner as in the first solid electrolyte. The ionic conductivity of the second solid electrolyte of Example 1 measured at 22°C was 2.9 x $10^{-3}$ S/cm.

(Production of Battery)

In an insulating tube with an inner diameter of 9.5 mm, 41.7 mg of the negative-electrode material of Example 1 and 160 mg of the second solid electrolyte of Example 1 were layered in this order. A pressure of 360 MPa was applied to the layered body to prepare a negative-electrode layer formed from the negative-electrode material of Example 1 and an electrolyte layer formed from the second solid electrolyte of Example 1. Metal In (thickness: 200 $\mu$m), metal Li (thickness: 300 $\mu$m), and metal In (thickness: 200 $\mu$m) were then sequentially layered on the electrolyte layer on the side opposite to the side in contact with the negative-electrode layer. A pressure of 80 MPa was applied to the layered body to form a positive-electrode layer.
Thus, a layered body composed of the positive-electrode layer, the electrolyte layer, and the negative-electrode layer was prepared. A current collector made of stainless steel was then attached to the top and bottom of the layered body, that is, to the positive-electrode layer and the negative-electrode layer, and a current collector lead was attached to the current collector. Finally, an insulating ferrule was used to shield the inside of the insulating tube from the outside atmosphere and to seal the inside of the tube. A battery according to Example 1 was thus produced.

(Charge-Discharge Test)

The battery according to Example 1 was subjected to a charge-discharge test as described below. The battery produced in Example 1 is a cell for a charge-discharge test and corresponds to a negative electrode half-cell. In Example 1, therefore, the direction in which the electric potential of the half-cell decreases due to the intercalation of Li ions into the negative electrode is referred to as charging, and the direction in which the electric potential increases is referred to as discharging. Thus, charging in Example 1 is substantially discharging (that is, in the case of a full cell), and discharging in Example 1 is substantially charging.
The battery according to Example 1 was placed in a thermostat at 25°C.
Constant-current charging was performed at a current value of 35 $\mu$A and was completed at an electric potential of 1.0 V with respect to Li.
Constant-current discharging was then performed at a current value of 35 $\mu$A and was completed at an electric potential of 2.5 V with respect to Li.
Constant-current charging was then performed at a current value of 700 $\mu$A and was completed at an electric potential of 1.0 V with respect to Li.
Constant-current discharging was then performed at a current value of 700 $\mu$A and was completed at an electric potential of 2.5 V with respect to Li.

The charge capacity for charging at 700 $\mu$A relative to the charge capacity for charging at 35 $\mu$A was calculated from the charge-discharge results. Table 1 shows the results.

[Reference Example 1]

(Preparation of First Solid Electrolyte)

A powder of a solid electrolyte $Li_{2.8}Ca_{0.1}Y_{0.6}Gd_{0.4}Br_2Cl_4$ was prepared in the same manner as in the second solid electrolyte of Example 1.

(Preparation of Negative-Electrode Material)

A negative-electrode material containing a negative-electrode active material $Li_4Ti_5O_{12}$, a first solid electrolyte $Li_{2.8}Ca_{0.1}Y_{0.6}Gd_{0.4}Br_2Cl_4$, and a conductive aid VGCF at a mass ratio of $Li_4Ti_5O_{12}:Li_{2.8}Ca_{0.1}Y_{0.6}Gd_{0.4}Br_2Cl_4:VGCF = 10:85:5$ was prepared in the same manner as in the negative-electrode material of Example 1.

(Preparation of Second Solid Electrolyte)

A powder of a solid electrolyte $Li_{2.8}Ca_{0.1}Y_{0.6}Gd_{0.4}Br_2Cl_4$ was prepared in the same manner as in the second solid electrolyte of Example 1.

(Production of Battery)

A battery according to Reference Example 1 including a layered body composed of a positive-electrode layer, an electrolyte layer, and a negative-electrode layer was produced in the same manner as in Example 1.

(Charge-Discharge Test)

The battery according to Reference Example 1 was subjected to a charge-discharge test in the same manner as in Example 1. The charge capacity for charging at 700 $\mu$A relative to the charge capacity for charging at 35 $\mu$A was calculated from the charge-discharge results. Table 1 shows the results.

[Reference Example2]

(Preparation of First Solid Electrolyte)

A powder of a solid electrolyte $Li_3YBr_2Cl_4$ was prepared in the same manner as in the first solid electrolyte of Example 1.

(Preparation of Negative-Electrode Material)

A negative-electrode material containing a negative-electrode active material $Li_4Ti_5O_{12}$, a first solid electrolyte $Li_3YBr_2Cl_4$, and a conductive aid VGCF at a mass ratio of $Li_4Ti_5O_{12}:Li_3YBr_2Cl_4:VGCF = 10:85:5$ was prepared in the same manner as in the negative-electrode material of Example 1.

(Preparation of Second Solid Electrolyte)

A powder of a solid electrolyte $Li_3YBr_2Cl_4$ was prepared in the same manner as in the first solid electrolyte of Example 1.

(Production of Battery)

A battery according to Reference Example 2 including a layered body composed of a positive-electrode layer, an electrolyte layer, and a negative-electrode layer was produced in the same manner as in Example 1.

(Charge-Discharge Test)

The battery according to Reference Example 2 was subjected to a charge-discharge test in the same manner as in Example 1. The charge capacity for charging at 700 $\mu$A relative to the charge capacity for charging at 35 $\mu$A was calculated from the charge-discharge results. Table 1 shows the results.

[Table 1]

| | First solid electrolyte | | Second solid electrolyte | | Charge capacity for charging at 700 $\mu$A relative to charge capacity for charging at 35 $\mu$A (%) |
|---|---|---|---|---|---|
| Example 1 | $Li_3YBr_2Cl_4$ | Monoclinic crystal | $Li_{2.8}Ca_{0.1}Y_{0.6}Gd_{0.4}Br_2Cl_4$ | Trigonal crystal | 70.5 |
| Reference Example 1 | $Li_{2.8}Ca_{0.1}Y_{0.6}Gd_{0.4}Br_2Cl_4$ | Trigonal crystal | $Li_{2.8}Ca_{0.1}Y_{0.6}Gd_{0.4}Br_2Cl_4$ | Trigonal crystal | 44.2 |
| Reference Example 2 | $Li_3YBr_2Cl_4$ | Monoclinic crystal | $Li_3YBr_2Cl_4$ | Monoclinic crystal | 67.1 |

[Example 2]

(Preparation of First Solid Electrolyte)

A powder of a solid electrolyte $Li_3YBr_2Cl_4$ was prepared in the same manner as in the first solid electrolyte of Example 1.

(Preparation of Negative-Electrode Material)

A negative-electrode material containing a negative-electrode active material $Li_4Ti_5O_{12}$, a first solid electrolyte $Li_3YBr_2Cl_4$, and a conductive aid VGCF at a mass ratio of $Li_4Ti_5O_{12}:Li_3YBr_2Cl_4:VGCF = 65:30:5$ was prepared in the same manner as in the negative-electrode material of Example 1.

(Preparation of Second Solid Electrolyte)

A powder of a solid electrolyte $Li_{2.8}Ca_{0.1}Y_{0.6}Gd_{0.4}Br_2Cl_4$ was prepared in the same manner as in the second solid electrolyte of Example 1.

(Preparation of Positive-Electrode Material)

In a dry argon atmosphere with a dew point of -40°C or less, a positive-electrode active material $Li(NiCoMn)O_2$ (hereinafter referred to as NCM), the first solid electrolyte $Li_3YBr_2Cl_4$ of Example 2, and a conductive aid VGCF were prepared at a mass ratio of $NCM:Li_3YBr_2Cl_4:VGCF = 83:16:1$. These were mixed in an agate mortar to prepare a positive-electrode material of Example 2.

(Production of Battery)

In an insulating tube with an inner diameter of 9.5 mm, 15.4 mg of the negative-electrode material of Example 2, 80 mg of the second solid electrolyte of Example 2, and 8.5 mg of the positive-electrode material of Example 2 were layered in this order. A pressure of 360 MPa was applied to the layered body to prepare a layered body composed of a positive-electrode layer, an electrolyte layer, and a negative-electrode layer. A current collector made of stainless steel was then attached to the top and bottom of the layered body, that is, to the positive-electrode layer and the negative-electrode layer, and a current collector lead was attached to the current collector. Finally, an insulating ferrule was used to shield the inside of the insulating tube from the outside atmosphere and to seal the inside of the tube. A battery according to Example 2 was thus produced.

(Charge-Discharge Test)

The battery according to Example 2 was subjected to a charge-discharge test as described below.

The battery according to Example 2 was placed in a thermostat at 25°C.

Constant-current charging was then performed at a current value of 70 $\mu$A and was completed at an electric potential of 2.85 V with respect to Li.

Constant-current discharging was then performed at a current value of 70 $\mu$A and was completed at an electric potential of 1.0 V with respect to Li.

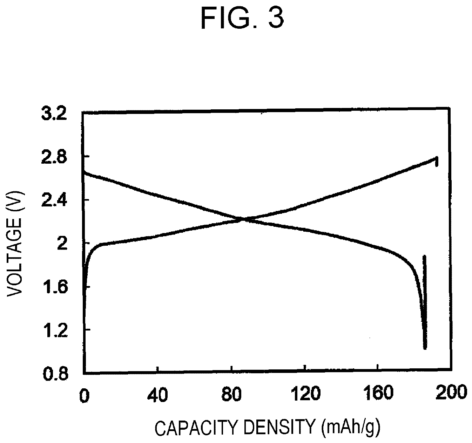

Fig. 3 is a graph showing the results of an initial charge-discharge test of the battery according to Example 2.

Next, the relationship between the crystal structure of the first solid electrolyte contained in the negative-electrode layer and the output characteristics of the battery is further confirmed from the following Reference Examples 3 to 6.

[Reference Example 3]

(Preparation of First Solid Electrolyte)

A powder of a solid electrolyte $Li_3YBr_2Cl_4$ was prepared in the same manner as in the first solid electrolyte of Example 1.

(Preparation of Negative-Electrode Material)

A negative-electrode material containing a negative-electrode active material $Li_4Ti_5O_{12}$, a first solid electrolyte $Li_3YBr_2Cl_4$, and a conductive aid VGCF at a mass ratio of $Li_4Ti_5O_{12}:Li_3YBr_2Cl_4:VGCF = 10:85:5$ was prepared in the same manner as in the negative-electrode material of Example 1.

(Production of Battery)

In an insulating tube with an inner diameter of 9.5 mm, 20.8 mg of the negative-electrode material of Reference Example 3 and 80 mg of a solid electrolyte $Li_6PS_5Cl$ manufactured by MSE were layered in this order. A pressure of 360 MPa was applied to the layered body to prepare a negative-electrode layer formed from the negative-electrode material of Reference Example 3 and an electrolyte layer formed from $Li_6PS_5Cl$. Metal In (thickness: 200 $\mu$m), metal Li (thickness: 300 $\mu$m), and metal In (thickness: 200 $\mu$m) were then sequentially layered on the electrolyte layer on the side opposite to the side in contact with the negative-electrode layer. A pressure of 80 MPa was applied to the layered body to form a positive-electrode layer.

Thus, a layered body composed of the positive-electrode layer, the electrolyte layer, and the negative-electrode layer was prepared. A current collector made of stainless steel was then attached to the top and bottom of the layered body, that is, to the positive-electrode layer and the negative-electrode layer, and a current collector lead was attached to the current collector. Finally, an insulating ferrule was used to shield the inside of the insulating tube from the outside atmosphere and to seal the inside of the tube. A battery according to Reference Example 3 was thus produced.

(Charge-Discharge Test)

The battery according to Reference Example 3 was subjected to a charge-discharge test as described below.

The battery according to Reference Example 3 was placed in a thermostat at 25°C.

Constant-current charging was performed at a current value of 17.5 $\mu$A and was completed at an electric potential of 1.0 V with respect to Li.

Constant-current discharging was then performed at a current value of 17.5 $\mu$A and was completed at an electric potential of 2.5 V with respect to Li.

Constant-current charging was then performed at a current value of 350 $\mu$A and was completed at an electric potential of 1.0 V with respect to Li.

Constant-current discharging was then performed at a current value of 350 $\mu$A and was completed at an electric potential of 2.5 V with respect to Li.

The charge capacity for charging at 350 $\mu$A relative to the charge capacity for charging at 17.5 $\mu$A was calculated from the charge-discharge results. Table 2 shows the results.

(Reference Example 4)

(Preparation of First Solid Electrolyte)

In a dry argon atmosphere with a dew point of -40°C or less, raw material powders LiBr and YBr$_3$ were prepared at a mole ratio of LiBr:YBr$_3$ = 3:1. The raw material powders were then milled in a planetary ball mill (P-7 manufactured by Fritsch GmbH) at 600 rpm for 25 hours to prepare a powder of a first solid electrolyte Li$_3$YBr$_6$ of Reference Example 4.

(Evaluation of Crystal Structure of First Solid Electrolyte)

The powder of the first solid electrolyte of Reference Example 4 was subjected to X-ray diffractometry in the same manner as in Example 1 to obtain an X-ray diffraction pattern and further analyze the crystal structure. As a result of the evaluation by the X-ray diffraction method, an X-ray diffraction pattern assigned to a monoclinic crystal was observed as a main crystalline phase.

(Evaluation of Ionic Conductivity of First Solid Electrolyte)

The ionic conductivity of the first solid electrolyte of Reference Example 4 was measured in the same manner as in the first solid electrolyte of Example 1. The ionic conductivity of the first solid electrolyte at 22°C was 0.6 x 10$^{-3}$ S/cm.

(Preparation of Negative-Electrode Material)

A negative-electrode material containing a negative-electrode active material Li$_4$Ti$_5$O$_{12}$, a first solid electrolyte Li$_3$YBr$_6$, and a conductive aid VGCF at a mass ratio of Li$_4$Ti$_5$O$_{12}$:Li$_3$YBr$_6$:VGCF = 10:85:5 was prepared in the same manner as in the negative-electrode material of Example 1.

(Production of Battery)

A battery according to Reference Example 4 including a layered body composed of a positive-electrode layer, a solid electrolyte layer, and a negative-electrode layer was produced in the same manner as in Reference Example 3.

(Charge-Discharge Test)

The battery according to Reference Example 4 was subjected to a charge-discharge test in the same manner as in Reference Example 3. The charge capacity for charging at 350 μA relative to the charge capacity for charging at 17.5 μA was calculated from the charge-discharge results. Table 2 shows the results.

(Reference Example 5)

(Preparation of First Solid Electrolyte)

In a dry argon atmosphere with a dew point of -40°C or less, raw material powders LiCl and YCl$_3$ were prepared at a mole ratio of LiCl:YCl$_3$ = 3:1. The raw material powders were then milled in a planetary ball mill (P-7 manufactured by Fritsch GmbH) at 600 rpm for 25 hours to prepare a powder of a first solid electrolyte Li$_3$YCl$_6$ of Reference Example 5.

(Evaluation of Crystal Structure of First Solid Electrolyte)

The powder of the first solid electrolyte of Reference Example 5 was subjected to X-ray diffractometry in the same manner as in Example 1 to obtain an X-ray diffraction pattern and further analyze the crystal structure. As a result of the evaluation by the X-ray diffraction method, an X-ray diffraction pattern assigned to a trigonal crystal was observed as a main crystalline phase.

(Evaluation of Ionic Conductivity of First Solid Electrolyte)

The ionic conductivity of the first solid electrolyte of Reference Example 5 was measured in the same manner as in the first solid electrolyte of Example 1. The ionic conductivity of the first solid electrolyte at 22°C was 0.3 x 10$^{-3}$ S/cm.

(Preparation of Negative-Electrode Material)

A negative-electrode material containing a negative-electrode active material $Li_4Ti_5O_{12}$, a first solid electrolyte $Li_3YCl_6$, and a conductive aid VGCF at a mass ratio of $Li_4Ti_5O_{12}:Li_3YCl_6:VGCF = 10:85:5$ was prepared in the same manner as in the negative-electrode material of Example 1.

(Production of Battery)

A battery according to Reference Example 5 including a layered body composed of a positive-electrode layer, a solid electrolyte layer, and a negative-electrode layer was produced in the same manner as in Reference Example 3.

(Charge-Discharge Test)

The battery according to Reference Example 5 was subjected to a charge-discharge test in the same manner as in Reference Example 3. The charge capacity for charging at 350 $\mu$A relative to the charge capacity for charging at 17.5 $\mu$A was calculated from the charge-discharge results. Table 2 shows the results.

(Reference Example 6)

(Preparation of First Solid Electrolyte)

A powder of a solid electrolyte $Li_{2.8}Ca_{0.1}Y_{0.6}Gd_{0.4}Br_2Cl_4$ was prepared in the same manner as in the second solid electrolyte of Example 1.

(Preparation of Negative-Electrode Material)

A negative-electrode material containing a negative-electrode active material $Li_4Ti_5O_{12}$, a first solid electrolyte $Li_{2.8}Ca_{0.1}Y_{0.6}Gd_{0.4}Br_2Cl_4$, and a conductive aid VGCF at a mass ratio of $Li_4Ti_5O_{12}:Li_{2.8}Ca_{0.1}Y_{0.6}Gd_{0.4}Br_2Cl_4:VGCF = 10:85:5$ was prepared in the same manner as in the negative-electrode material of Example 1.

(Production of Battery)

A battery according to Reference Example 6 including a layered body composed of a positive-electrode layer, a solid electrolyte layer, and a negative-electrode layer was produced in the same manner as in Reference Example 5.

(Charge-Discharge Test)

The battery according to Reference Example 6 was subjected to a charge-discharge test in the same manner as in Reference Example 3. The charge capacity for charging at 350 $\mu$A relative to the charge capacity for charging at 17.5 $\mu$A was calculated from the charge-discharge results. Table 2 shows the results.

[Table 2]

| | First solid electrolyte | | Second solid electrolyte | Charge capacity for charging at 350 $\mu$A relative to charge capacity for charging at 17.5 $\mu$A (%) |
|---|---|---|---|---|
| Reference Example 3 | $Li_3YBr_2Cl_4$ | Monoclinic crystal | $Li_6PS_5Cl$ | 30.8 |
| Reference Example 4 | $Li_3YBr_6$ | Monoclinic crystal | $Li_6PS_5Cl$ | 29.1 |
| Reference Example 5 | $Li_3YCl_6$ | Trigonal crystal | $Li_6PS_5Cl$ | 28.0 |
| Reference Example 6 | $Li_{2.8}Ca_{0.1}Y_{0.6}Gd_{0.4}Br_2Cl_4$ | Trigonal crystal | $Li_6PS_5Cl$ | 18.4 |

(Discussion)

The battery according to Example 1 is a battery including a negative-electrode layer containing Li, Ti, and O as negative-electrode active materials. In addition to such a structure, the battery according to Example 1 has a structure in which the first solid electrolyte in the negative-electrode layer contains Li, M1, and X1 and contains a crystalline phase assigned to a monoclinic crystal, and the second solid electrolyte in the electrolyte layer contains Li, M2, and X2 and contains a crystalline phase assigned to a trigonal crystal. M1, X1, M2, and X2 are as described above. On the other hand, the battery according to Reference Example 1 is different from the battery according to Example 1 in that the battery according to Reference Example 1 has a structure in which a solid electrolyte having a crystalline phase assigned to a trigonal crystal is used for the first solid electrolyte. The battery according to Reference Example 2 has a structure in which a solid electrolyte having a crystalline phase assigned to a monoclinic crystal is used for the second solid electrolyte. The charge capacity for charging at 700 μA relative to the charge capacity for charging at 35 μA was higher in the battery according to Example 1 than in the batteries according to Reference Examples 1 and 2. This result shows that a battery satisfying the structure of a battery according to the present disclosure has higher charge-discharge rate performance than the batteries according to Reference Examples 1 and 2, which do not satisfy the structure of a battery according to the present disclosure, that is, batteries in which solid electrolytes suitable for the negative-electrode layer and the electrolyte layer are not used. This result shows that a battery according to the present disclosure can have improved output characteristics.

A comparison of the results of Reference Examples 3 to 6 in Table 2 shows that the charge capacity at high load is higher when using a material of a monoclinic system compatible with a structure mixed with a negative-electrode active material than when selecting a solid electrolyte with high ionic conductivity of the material itself as a first solid electrolyte.

A comparison of the results of Example 1 and Reference Example 1 in Table 1 shows that the charge capacity at high load is higher when using a material of a monoclinic system compatible with a structure mixed with a negative-electrode active material than when selecting a solid electrolyte with high ionic conductivity of the material itself as a first solid electrolyte.

It can also be shown that the charge capacity at high load is higher when using a solid electrolyte with high ionic conductivity of the material itself as a second solid electrolyte.

In the battery according to Example 2, a solid electrolyte containing Li, M, and X and free of sulfur is used as a solid electrolyte contained in the negative-electrode layer, the electrolyte layer, and the positive-electrode layer. M denotes at least one selected from the group consisting of metal elements and metalloid elements other than Li, and X denotes at least one selected from the group consisting of F, Cl, Br, and I. The results in Fig. 3 show that a battery in which only such a material is used as a solid electrolyte can stably operate. The battery according to Example 2 does not contain a solid electrolyte containing sulfur. Thus, the battery according to Example 2 has no risk of reacting with water and generating harmful hydrogen sulfide gas.

Industrial Applicability

A battery according to the present disclosure has good output characteristics and can be used, for example, as an all-solid-state lithium secondary battery.

Reference Signs List

| | |
|---|---|
| 1000 | battery |
| 101 | positive-electrode layer |
| 102 | electrolyte layer |
| 103 | negative-electrode layer |
| 104 | negative-electrode active material particle |
| 105 | solid electrolyte particle |
| 300 | press forming die |
| 301 | punch top |
| 302 | die |
| 303 | punch bottom |

**Claims**

1. A battery comprising:

   a positive-electrode layer;
   a negative-electrode layer; and
   an electrolyte layer between the positive-electrode layer and the negative-electrode layer,
   wherein the negative-electrode layer includes a negative-electrode active material and a first solid electrolyte,
   the electrolyte layer contains a second solid electrolyte,
   the negative-electrode active material contains Li, Ti, and O,
   the first solid electrolyte contains a crystalline phase assigned to a monoclinic crystal and contains Li, M1, and X1,
   wherein M1 denotes at least one selected from the group consisting of metal elements and metalloid elements other than Li, and
   X1 denotes at least one selected from the group consisting of F, Cl, Br, and I, and
   the second solid electrolyte contains a crystalline phase assigned to a trigonal crystal and contains Li, M2, and X2,
   wherein M2 denotes at least one selected from the group consisting of metal elements and metalloid elements other than Li, and
   X2 denotes at least one selected from the group consisting of F, Cl, Br, and I.

2. The battery according to claim 1, wherein the first solid electrolyte is substantially free of sulfur.

3. The battery according to claim 1 or 2, wherein the second solid electrolyte is substantially free of sulfur.

4. The battery according to any one of claims 1 to 3, wherein X1 denotes at least one selected from the group consisting of Cl, Br, and I.

5. The battery according to any one of claims 1 to 4, wherein X1 contains Br.

6. The battery according to any one of claims 1 to 5, wherein the first solid electrolyte is represented by the formula (1):

$$\mathrm{Li}_{\alpha1}\mathrm{M1}_{\beta1}\mathrm{X1}_{\gamma1} \qquad \text{formula (1)}$$

   wherein $\alpha1$, $\beta1$, and $\gamma1$ each independently denote a value greater than 0.

7. The battery according to any one of claims 1 to 6, wherein M1 contains Y.

8. The battery according to claim 7, wherein

$$2.5 \le \alpha1 \le 3.5,$$

$$0.5 \le \beta1 \le 1.5,$$

   and

$$\gamma1 = 6$$

   are satisfied in the formula (1).

9. The battery according to any one of claims 1 to 8, wherein the first solid electrolyte is at least one selected from the group consisting of $\mathrm{Li_3YBr_6}$, $\mathrm{Li_3YBr_2Cl_4}$, and $\mathrm{Li_3YBr_2Cl_2I_2}$.

10. The battery according to any one of claims 1 to 9, wherein X2 denotes at least one selected from the group consisting of Cl, Br, and I.

11. The battery according to any one of claims 1 to 10, wherein X2 contains Cl.

12. The battery according to any one of claims 1 to 11, wherein the second solid electrolyte is represented by the formula (2):

$$Li_{\alpha2}M2_{\beta2}X2_{\gamma2} \qquad \text{formula (2)}$$

wherein $\alpha2$, $\beta2$, and $\gamma2$ each independently denote a value greater than 0.

13. The battery according to any one of claims 1 to 12, wherein M2 contains Y.

14. The battery according to claim 13, wherein formulae

$$2.5 \le \alpha2 \le 3.5$$

$$0.5 \le \beta2 \le 1.5$$

$$\gamma2 = 6$$

are satisfied in the formula (2).

15. The battery according to any one of claims 1 to 14, wherein M2 contains Y, Ca, and Gd.

16. The battery according to claim 15, wherein the second solid electrolyte is represented by the formula (3):

$$Li_{6-2a-3d}Ca_a(Y_{1-b}Gd_b)_dBr_{6-c}Cl_c \qquad (3)$$

wherein formulae

$$0 < a < 3,$$

$$0 < b < 1,$$

$$0 < c < 6,$$

and

$$0 < d < 1.5$$

are satisfied.

17. The battery according to claim 16, wherein the second solid electrolyte is $Li_{2.8}Ca_{0.1}Y_{0.6}Gd_{0.4}Br_2Cl_4$.

18. The battery according to any one of claims 1 to 17, wherein the negative-electrode active material is lithium titanium oxide.

19. The battery according to claim 18, wherein the negative-electrode active material is $Li_4Ti_5O_{12}$.

20. The battery according to any one of claims 1 to 19, wherein the positive-electrode layer contains lithium nickel cobalt manganese oxide.

# FIG. 1

<u>1000</u>

101
102
103

105
104

# FIG. 2

PRESSURIZE

300

301

302

303

POTENTIOSTAT

101

PRESSURIZE

# FIG. 3

## INTERNATIONAL SEARCH REPORT

International application No.

**PCT/JP2021/044435**

### A. CLASSIFICATION OF SUBJECT MATTER

*H01M 10/0525*(2010.01)i; *H01M 4/485*(2010.01)i; *H01M 4/62*(2006.01)i; *H01M 10/0562*(2010.01)i
FI: H01M10/0525; H01M10/0562; H01M4/485; H01M4/62 Z

According to International Patent Classification (IPC) or to both national classification and IPC

### B. FIELDS SEARCHED

Minimum documentation searched (classification system followed by classification symbols)

H01M10/0525; H01M4/485; H01M4/62; H01M10/0562

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| A | WO 2018/025582 A1 (PANASONIC INTELLECTUAL PROPERTY MANAGEMENT CO., LTD.) 08 February 2018 (2018-02-08) claims 1, 7, 12, 28, paragraphs [0014]-[0018], [0041]-[0045] | 1-20 |
| A | JP 2015-65021 A (MURATA MANUFACTURING CO) 09 April 2015 (2015-04-09) claims 1, 4 | 1-20 |
| A | WO 2021/039834 A1 (SHOWA DENKO KK) 04 March 2021 (2021-03-04) claims 7-8, paragraph [0038], table 1 | 1-20 |
| P, A | WO 2021/199677 A1 (PANASONIC INTELLECTUAL PROPERTY MANAGEMENT CO., LTD.) 07 October 2021 (2021-10-07) examples 8, 9, 15, paragraphs [0025]-[0028], [0178] | 1-20 |

☐ Further documents are listed in the continuation of Box C.      ☑ See patent family annex.

| | | |
|---|---|---|
| \* | Special categories of cited documents: | |
| "A" | document defining the general state of the art which is not considered to be of particular relevance | "T" later document published after the international filing date or priority date and not in conflict with the application but cited to understand the principle or theory underlying the invention |
| "E" | earlier application or patent but published on or after the international filing date | "X" document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" document member of the same patent family |
| "P" | document published prior to the international filing date but later than the priority date claimed | |

| Date of the actual completion of the international search | Date of mailing of the international search report |
|---|---|
| **14 February 2022** | **22 February 2022** |

| Name and mailing address of the ISA/JP | Authorized officer |
|---|---|
| **Japan Patent Office (ISA/JP)** **3-4-3 Kasumigaseki, Chiyoda-ku, Tokyo 100-8915 Japan** | |
| | Telephone No. |

Form PCT/ISA/210 (second sheet) (January 2015)

INTERNATIONAL SEARCH REPORT
Information on patent family members

International application No.

**PCT/JP2021/044435**

| Patent document cited in search report | | | Publication date (day/month/year) | Patent family member(s) | | | Publication date (day/month/year) |
|---|---|---|---|---|---|---|---|
| WO | 2018/025582 | A1 | 08 February 2018 | US 2019/0088995 A1 claims 1, 7, 12, 28, paragraphs [0024]-[0029], [0052]-[0056] EP 3496202 A1 CN 108701860 A | | | |
| JP | 2015-65021 | A | 09 April 2015 | (Family: none) | | | |
| WO | 2021/039834 | A1 | 04 March 2021 | (Family: none) | | | |
| WO | 2021/199677 | A1 | 07 October 2021 | (Family: none) | | | |

Form PCT/ISA/210 (patent family annex) (January 2015)

26

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2019146295 A